# EUROPÄISCHE PATENTANMELDUNG

(11) **EP 2 642 386 A1**
(43) Veröffentlichungstag der Anmeldung: **25.09.2013**
(21) Anmeldenummer: 12160260.1
(22) Anmeldetag: 20.03.2012
(51) Int. Cl.: G06F 9/445

(54) **Verfahren zum Laden von einzelnen Programmen mit externen Beziehungen in ein Automatisierungsgerät, Computerprogramm zur Implementierung des Verfahrens, Automatisierungsgerät mit einem solchen Computerprogramm und Verwendung eines Zustandsautomaten zur Realisierung des Verfahrens.**

(71) Anmelder: Siemens Aktiengesellschaft, 80333 München (DE)
(72) Erfinder: Pohlan, Rudolf, 76337 Waldbronn (DE)

(57) **Zusammenfassung**

Die Erfindung betrifft zuvorderst ein Verfahren zum Laden von einzelnen Automatisierungsprogrammen (18) mit externen Beziehungen in ein Automatisierungsgerät (10), wobei ein zu ladendes Automatisierungsprogramm (18) ein oder mehrere Ladeeinheiten (34) umfasst oder benutzt, wobei für alle Ladeeinheiten (34) ein Ladezustand (36) verwaltet wird, wobei sich das Verfahren dadurch auszeichnet, dass die möglichen Ladezustände (36) um Übergangszustände (38) erweitert sind, wobei die Übergangszustände (38) automatisch erzeugt werden, wenn beim Laden eines Automatisierungsprogramms (18) mit externen Beziehungen neben dem Automatisierungsprogramm (18) und dessen Ladeeinheiten (34) automatisch und aufgrund der externen Beziehungen zumindest eine weitere Ladeeinheit (34) geladen wird.

## Beschreibung

Die Erfindung betrifft zuvorderst ein Verfahren zum Laden von einzelnen im Folgenden als Automatisierungsprogramme oder einzeln als Automatisierungsprogramm bezeichneten Programmen mit externen Beziehungen. Das Laden des Automatisierungsprogramms oder der Automatisierungsprogramme erfolgt dabei in ein Automatisierungsgerät. Als externe Beziehungen sollen dabei Bezugnahmen auf externe Daten, also Abhängigkeiten des Automatisierungsprogramms von solchen externen Daten, verstanden werden.

Als Automatisierungsgerät werden sämtliche Geräte, Einrichtungen oder Systeme, also neben z.B. Steuerungen wie speicherprogrammierbaren Steuerungen, Prozessrechnern, (Industrie-)Computern und dergleichen auch Antriebssteuerungen, Frequenzumrichter und Ähnliches verstanden, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird. Insbesondere handelt es sich bei den hier im Vordergrund stehenden Automatisierungsgeräten um Geräte der oben genannten Art für den industriellen Einsatz.

Automatisierungsgeräte der eingangs genannten Art sind an sich bekannt. Gemäß einem für solche Automatisierungsgeräte vorgesehenen Programmiermodell werden softwaretechnische Automatisierungsprogramme mit Hilfe von speziellen Programmierwerkzeugen, insbesondere Compilern und dergleichen, erstellt. Das oder die Automatisierungsprogramme werden auf das Automatisierungsgerät geladen und dort von dessen Betriebssystem insbesondere zyklisch zur Ausführung gebracht.

Die Programmierwerkzeuge und Compiler für in der Automatisierungstechnik verbreitete Programmiersprachen - zum Beispiel Anweisungsliste (AWL; Statement List), Kontaktplan (KOP; Ladder Logic), Funktionsplan (FUP; Function Block Diagram), Structured Text (ST), Continuous Function Chart (CFC), Sequential Function Chart (SFC), etc. - werden von einem zur Erstellung einer jeweiligen Automatisierungslösung vorgesehenen Engineeringsystem zur Verfügung gestellt.

Speziell bei kontinuierlichen verfahrenstechnischen Prozessen aber auch bei diskontinuierlichen Prozessen - wie zum Beispiel im Kraftwerksbereich, in der Zementindustrie, der Chemieindustrie oder der pharmazeutischen Industrie, etc. - muss ein kontrolliertes Laden eines Automatisierungsprogramms in einem speziellen Betriebszustand des Automatisierungsgeräts, der die fortgesetzte Steuerung und/oder Überwachung des jeweiligen technischen Prozesses ermöglicht, unterstützt werden. Bei Automatisierungsgeräten in Form von speicherprogrammierbaren Steuerungen wird dieser spezielle Betriebszustand als "Betriebszustand RUN" bezeichnet. Gerade in der Inbetriebsetzungsphase werden einzelne Messstellen häufig sukzessive in Betrieb genommen. Dazu muss jeweils das korrespondierende Automatisierungsprogramm einzeln in diesem speziellen Betriebszustand, insbesondere im Betriebszustand RUN, auf das Automatisierungsgerät geladen werden können. Im Folgenden wird dieser spezielle Betriebszustand ohne Verzicht auf eine weitergehende Allgemeingültigkeit für alle hier in Frage kommenden Automatisierungsgeräte als Betriebszustand RUN bezeichnet.

Bei einem Automatisierungsprogramm mit externen Abhängigkeiten, die durch programmierte Zugriffe auf externe Programmvariable, Datenbausteine oder Funktionen etc. entstehen können, rufen diese Abhängigkeiten das Problem hervor, dass beim Laden des Automatisierungsprogramms die externen Ressourcen (Datenbausteine, etc.) verfügbar sein müssen, obwohl Nachbarprogramme, denen diese externen Ressourcen zugeordnet sind, selbst noch nicht geladen sind. Wenn diese Abhängigkeiten - wie eine Verschaltung auf eine Dateninstanz eines Nachbarprogramms - beim Laden eines Automatisierungsprogramms auf das Automatisierungsgerät nicht befriedigt sind, werden Zugriffsfehler erzeugt und gemeldet, die natürlich unerwünscht sind. Bei Einsatz einer speicherprogrammierbaren Steuerung (SPS) für verfahrenstechnische Prozesse ergibt sich zusätzlich das Problem, dass die Steuerung automatisch, aber dennoch ungewollt, den Betriebszustand RUN verlässt oder zumindest verlassen kann, wenn externe Abhängigkeiten des neu geladenen Automatisierungsprogramms dauerhaft nicht befriedigt werden.

Bei dem oben gebildeten Beispiel mit sukzessive zu ladenden Automatisierungsprogrammen für einzelne Messstellen möchte zum Beispiel der damit befasste Inbetriebsetzungsingenieur möglichst unabhängig und ungestört Messstelle für Messstelle seines Verantwortungsbereichs testen und in Betrieb setzen. Dabei darf allerdings der normale Betrieb der Automatisierungslösung nicht gestört werden und speziell gilt es zu erreichen, dass für das Automatisierungsgerät und die dort ausgeführte Automatisierungslösung der Betriebszustand RUN erhalten bleibt.

Zur Behandlung dieser Problematik sind Engineeringsysteme bekannt, die einen Zustandsautomaten für das Laden von Programmeinheiten nutzen, um die Ladevorgänge zu kontrollieren. Ein Beispiel für ein solches Engineeringsystem ist das unter der Bezeichnung PCS7 bekannte System der Siemens AG. Dort wird allerdings das Laden einzelner Automatisierungsprogramme im Betriebszustand RUN nicht unterstützt.

Andere Systeme unterstützen wiederum das Laden einzelner Automatisierungsprogramme mit Hilfe eines sogenannten Bausteininterpreters. Das Automatisierungsprogramm wird dabei nicht als ausführbarer Programmcode, sondern deskriptiv als sogenannte Bausteinliste mit Eingangs- / Ausgangsinstanzdaten geladen, die vom Bausteininterpreter abgearbeitet werden. Externe Datenzugriffe werden vom Bausteininterpreter befriedigt, indem ein entsprechender Verweis in der Bausteinliste ausgewertet und interpretiert wird. Bei externen Abhängigkeiten - zum Beispiel aufgrund einer Bausteinverschaltung zu einem Nachbarbaustein aus einem zweiten Automatisierungsprogramm - würde der Verweis zum Ausgang des verschalteten Nachbarbausteins fehlen, wenn der Nachbarbaustein noch nicht geladen ist.

Dieser Ansatz löst zwar prinzipiell das eingangs skizzierte Problem, nachteilig wirkt sich aber aus, dass die Verschaltungsquelle, also ein extern referenziertes Datum, zu Testzwecken nicht gesetzt werden kann. Gravierender ist allerdings noch der Umstand, dass Bausteininterpreter wegen ihres mangelnden Durchsatzes bei schnellen Prozessen nicht immer geeignet sind. Aufrufe von Programmbausteinen (Funktionsbausteine, Funktionen) und Datenzugriffe können direkt aus dem Programmcode wesentlich schneller ausgeführt werden. Es wird deshalb eine Lösung für diesen Ansatz gesucht.

Eine Aufgabe der Erfindung besteht entsprechend darin, ein Verfahren zum Laden von Automatisierungsprogrammen mit externen Beziehungen in ein Automatisierungsgerät anzugeben, das auch für das Laden von auf dem Automatisierungsgerät direkt ausführbaren Automatisierungsprogrammen verwendbar ist.

Diese Aufgabe wird erfindungsgemäß mit einem Verfahren mit den Merkmalen des Anspruchs 1 gelöst. Dazu ist bei einem Verfahren zum Laden eines Automatisierungsprogramms oder von einzelnen Automatisierungsprogrammen mit externen Beziehungen in ein Automatisierungsgerät, wobei ein zu ladendes Automatisierungsprogramm ein oder mehrere Ladeeinheiten umfasst oder benutzt und wobei für alle Ladeeinheiten ein Ladezustand verwaltet wird, Folgendes vorgesehen: Die möglichen Ladezustände sind um Übergangszustände erweitert und die Übergangszustände werden automatisch erzeugt, wenn beim Laden eines Automatisierungsprogramms mit externen Beziehungen neben dem Automatisierungsprogramm und dessen Ladeeinheiten automatisch und aufgrund der externen Beziehungen zumindest eine weitere Ladeeinheit geladen wird. Der automatisch erzeugte Übergangszustand ergibt sich dann für die oder jede auf diese Weise geladene weitere Ladeeinheit.

Zur weiteren Erläuterung der Erfindung und des Ansatzes gemäß der Erfindung seien hier einige Definitionen vorausgeschickt: Als Ladeeinheit wird ein separat in das Automatisierungsgerät ladbares Element, also zum Beispiel ein Funktionsbaustein, ein Programmbaustein, ein Datenbaustein, ein Instanzbaustein und so weiter, bezeichnet. Ein in das Automatisierungsgerät zu ladendes Automatisierungsprogramm kann eine derartige Ladeeinheit sein, zum Beispiel ein Programmbaustein, oder mehrere derartige Ladeeinheiten umfassen. Zur besseren Lesbarkeit der weiteren Beschreibung wird ein in das Automatisierungsgerät zu ladendes Automatisierungsprogramm im Folgenden als Ladeprogramm bezeichnet. Bereits auf dem Automatisierungsprogramm geladene Automatisierungsprogramme werden mitunter auch als Nachbarprogramme oder einzeln als Nachbarprogramm bezeichnet. Das jeweilige Ladeprogramm und auch jedes Nachbarprogramm kann ein oder mehrere Ladeeinheiten umfassen.

Externe Beziehungen können für das Ladeprogramm bestehen, indem in zumindest einer von dessen Ladeeinheiten eine nicht zu dem Ladeprogramm gehörige Ladeeinheit oder ein Datum in einer nicht zu dem Ladeprogramm gehörigen Ladeeinheit verwendet (referenziert) wird. Wenn eine solche, nicht zu dem Ladeprogramm gehörige Ladeeinheit auf dem Automatisierungsgerät bereits geladen ist, etwa als Bestandteil eines Nachbarprogramms, ist die Referenzierung aus dem Ladeprogramm (externe Referenzierung) normalerweise problemlos. Nur wenn die referenzierte Ladeeinheit auf dem Automatisierungsgerät nicht geladen ist, kommt es zu einer Fehlersituation, weil die Referenzierung gewissermaßen ins Leere geht.

Normalerweise ist für eine solche Fehlersituation vorgesehen, dass das Automatisierungsgerät den Betriebszustand RUN verlässt und stattdessen in den Betriebszustand STOP geht. Damit endet auch die bisherige Ausführung von auf dem Automatisierungsgerät geladenen Automatisierungsprogrammen und damit insgesamt die Ausführung der jeweiligen Automatisierungslösung. Obwohl in Ausnahmefällen in manchen Betriebsphasen einer verfahrenstechnischen Anlage - z.B. bei einer erneuten Inbetriebsetzung der Anlage und zumindest Teilen der Anlage - der Übergang in den Betriebszustand STOP wohlkoordiniert erfolgt, ist das Verlassen des Betriebszustands RUN in der Regel ungünstig und normalerweise unerwünscht, wie man sich speziell am Beispiel von kontinuierlichen industriellen Prozessen, bei denen zum Beispiel bestimmte Temperaturen und/oder die Berücksichtigung von chemischen Reaktionszeiten vonnöten sind, leicht vor Augen führen kann.

Die Ergänzung von möglichen Ladezuständen zur Kennzeichnung der Ladeeinheiten um Übergangszustände und deren automatische Erzeugung hilft, das Problem zu vermeiden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass sich ein erster Übergangszustand automatisch für eine Ladeeinheit ergibt, die zum Zwecke der Befriedigung eines externen Datenzugriffs auf eben diese Ladeeinheit geladen wurde. Eine zum Zwecke der Befriedigung eines externen Datenzugriffs auf eine Ladeeinheit geladene Ladeeinheit wird automatisch identifiziert. Dies kann anhand von entsprechenden Spezifikationen in dem Automatisierungsprogramm, das einen solchen externen Datenzugriff auf eine nicht zum Automatisierungsprogramm gehörende Ladeeinheit umfasst, erfolgen, wie dies zum Beispiel bei einzelnen Programmiersprachen als sogenannte "External-Anweisung" oder "Import-Anweisung" bekannt ist. Die automatische Identifikation einer zum Zwecke der Befriedigung eines externen Datenzugriffs zu ladenden Ladeeinheit kann auch anhand einer Untersuchung der von dem zu ladenden Automatisierungsprogramm umfassten Programmcodeanweisungen erfolgen, insbesondere aber auch durch eine datenbanktechnische Verwaltung der Relationen, wenn die Programme und ihre externen Datenzugriffe datenbanktechnisch verwaltet werden. Ein Datum, das mit einem externen Datenzugriff referenziert wird, ist nämlich üblicherweise entsprechend ausgezeichnet, so dass anhand dieser Auszeichnung einerseits der externe Datenzugriff und andererseits auch die Datenquelle oder Datensenke, auf die sich der Zugriff bezieht, nämlich die jeweilige Ladeeinheit, identifizierbar ist.

Die eingangs formulierte Aufgabe wird auch mit einem Zustandsautomaten als Mittel zur Ausführung des Verfahrens wie hier und nachfolgend beschrieben gelöst. Dabei ist vorgesehen, dass der in Software implementierte Zustandsautomat für alle Ladeeinheiten einen Ladezustand verwaltet, dass die möglichen Ladezustände um Übergangszustände erweitert sind und dass ein Übergangszustand automatisch erzeugt wird, wenn beim Laden eines Automatisierungsprogramms mit externen Beziehungen neben dem Automatisierungsprogramm und dessen Ladeeinheiten automatisch und aufgrund der externen Beziehungen zumindest eine weitere Ladeeinheit geladen wird. Der Zustandsautomat bewirkt also mittelbar oder unmittelbar das Laden des jeweils in das Automatisierungsgerät zu ladenden Automatisierungsprogramms mit den davon umfassten Ladeeinheiten und zusätzlich das Laden weiterer Ladeeinheiten aufgrund von externen Beziehungen aus dem zu ladenden Automatisierungsprogramm auf eine solche Ladeeinheit. Die Implementierung des Zustandsautomaten oder einer Softwareapplikation, die den Zustandsautomaten verwendet, umfasst dabei Programmcodemittel zum Erkennen von externen Beziehungen eines Automatisierungsprogramms wie oben beschrieben, also zum Erkennen von External-Anweisungen oder Import-Anweisungen oder dergleichen und/oder zum Erkennen von Spezifikationen von Datenquellen oder Datensenken, die sich auf einen Speicherort außerhalb des jeweils zu ladenden Automatisierungsprogramms und der davon umfassten Ladeeinheiten bezieht. Das Erkennen von externen Beziehungen umfasst dabei auch, nämlich im Rahmen des Zustandsautomaten, das Erkennen, ob eine aufgrund von externen Beziehungen benötigte weitere Ladeeinheit eventuell bereits in das Automatisierungsgerät geladen ist und damit keine Auszeichnung mit einem Übergangszustand erfordert.

Der Vorteil der Erfindung und ihrer Ausgestaltungen besteht damit insbesondere darin, dass Automatisierungsprogramme (Ladeprogramme) einzeln geladen werden können, obwohl sie programmierte externe Datenzugriffe, also Zugriffe auf Datenbausteine und dergleichen enthalten, die nicht zum Ladeprogramm selbst gehören oder diesem zugeordnet sind. Das Verhalten eines einzeln geladenen Automatisierungsprogramms mit externen Datenzugriffen ist dabei unabhängig davon, ob das oder die Nachbarprogramme, denen die extern referenzierten Datenquellen oder Datensenken zugeordnet sind, vollständig geladen sind oder nicht. Die externen Datenzugriffe werden befriedigt, indem zumindest das Laden der entsprechenden Datenbausteine und damit deren Verfügbarkeit im Speicher des Automatisierungsgeräts gewährleistet ist.

Als wesentlicher Vorteil wird darüber hinaus angesehen, dass das hier beschriebene Verfahren eine Lösung für Systeme bereitstellt, die ihre Automatisierungsprogramme wegen einer besseren Laufzeiteffizienz in einen Ablaufcode kompilieren und nicht interpretativ bearbeiten. Das Verfahren ist aber nicht auf unmittelbar ausführbare Ladeprogramme beschränkt, sondern eignet sich für jede Form von Ladeprogrammen.

Die oben genannte Aufgabe wird auch mit einem Programmiergerät zur Erstellung von Automatisierungsprogrammen der hier besprochenen Art oder mit einem Automatisierungsgerät der eingangs genannten Art gelöst, das nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Programmiergerät oder Automatisierungsgerät mit einer Verarbeitungseinheit in Form von oder nach Art eines Mikroprozessors und einem Speicher, wobei in den Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem zur Steuerung eines technischen Prozesses anhand einer durch ein oder mehrere Automatisierungsprogramme vorgegebenen Automatisierungslösung, wobei eine Entwicklungsumgebung zum Erstellen solcher Automatisierungsprogramme dient,
- FIG 2: ein in das Automatisierungsgerät zu ladendes Automatisierungsprogramm (Ladeprogramm) mit externen Beziehungen in ein weiteres Automatisierungsprogramm (Nachbarprogramm),
- FIG 3: die Situation gemäß FIG 2, wobei auch das Nachbarprogramm in das Automatisierungsgerät geladen ist,
- FIG 4: einen Graph eines Zustandsautomaten mit einzelnen von dem Zustandsautomaten verwalteten Ladezuständen und
- FIG 5: einen Graph eines Zustandsautomaten wie in FIG 4 mit einzelnen von dem Zustandsautomaten zusätzlich zu den Ladezuständen verwalteten Übergangszuständen.

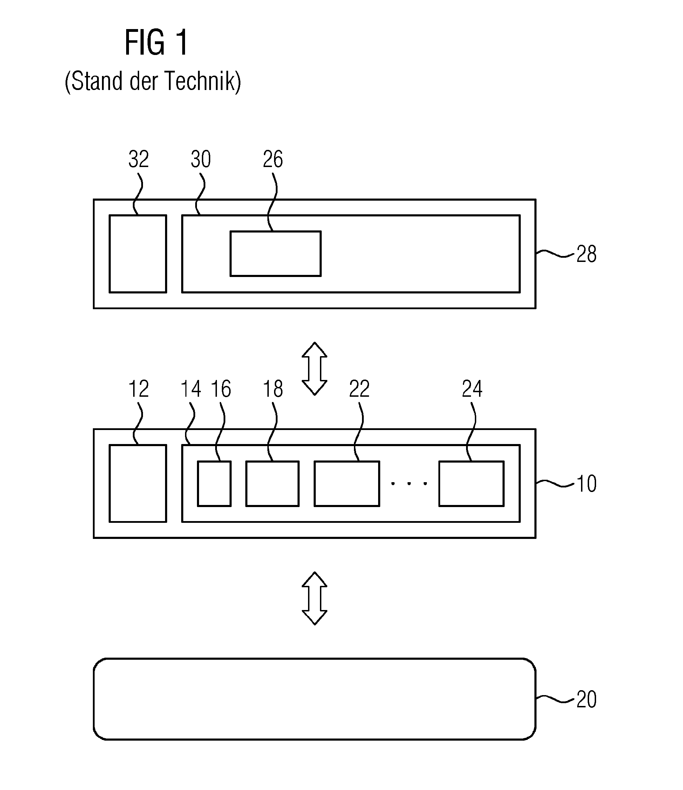

FIG 1 zeigt schematisch vereinfacht als Beispiel für ein Automatisierungssystem ein Automatisierungsgerät 10 der eingangs genannten Art, also zum Beispiel eine speicherprogrammierbare Steuerung (SPS). In der Praxis kann ein Automatisierungssystem eine Vielzahl von Automatisierungsgeräten 10 umfassen. Das in FIG 1 dargestellte Automatisierungsgerät 10 umfasst in an sich bekannter Art eine Verarbeitungseinheit, also zum Beispiel einen Mikroprozessor 12, und einen Speicher 14. In den Speicher 14 ist neben einem Betriebssystem 16 zumindest ein Automatisierungsprogramm 18 geladen. Das Automatisierungsgerät 10 ist insgesamt - ggf. zusammenwirkend mit anderen, nicht dargestellten, gleichen oder ähnlichen Automatisierungsgeräten - zur Steuerung und/oder Überwachung eines nicht näher darstellten technischen Prozesses 20, insbesondere eines industriellen technischen Prozesses, vorgesehen. Dabei wird das oder jedes Automatisierungsprogramm 18 unter Kontrolle des Betriebssystems 16 ausgeführt. Bei einer speicherprogrammierbaren Steuerung als Automatisierungsgerät 10 ist eine zyklische Ausführung vorgesehen.

FIG 1 zeigt, dass in den Speicher 14 mehrere Automatisierungsprogramme 18 geladen sein können. Zur Verbesserung der Lesbarkeit werden einzelne Automatisierungsprogramme 18 nachfolgend - wie oben eingeführt - als Ladeprogramm 22 oder als Nachbarprogramm 24 bezeichnet. Auch bei dem Ladeprogramm 22 und dem oder jedem Nachbarprogramm 24 handelt es sich um ein Automatisierungsprogramm 18.

Automatisierungsprogramme 18, 22, 24 werden mit einer Entwicklungsumgebung 26 erstellt. Dafür zeigt FIG 1 schematisch vereinfacht ein Programmiergerät 28 als Beispiel für eine Hardware, auf der eine solche Entwicklungsumgebung 26 verwendet werden kann. Die Entwicklungsumgebung 26 ist eine Softwareapplikation und als solche in einen Speicher 30 des Programmiergeräts 28 geladen. Zur Ausführung der Entwicklungsumgebung 26 weist das Programmiergerät 28 in an sich bekannter Art und Weise eine Verarbeitungseinheit, also zum Beispiel einen Mikroprozessor 32, auf.

Ein zum Laden in das Automatisierungsgerät 10 bestimmtes Automatisierungsprogramm 18 wird normalerweise zumindest temporär im Speicher 30 des Programmiergeräts 28 vorgehalten. Mit dem Transfer zum Automatisierungsgerät 10 - also mit dem Laden des Automatisierungsprogramms 18 in dessen Speicher 14 - wird das übertragene Automatisierungsprogramm 18 zu einem Ladeprogramm 22 gemäß der eingangs vorangestellten Definition.

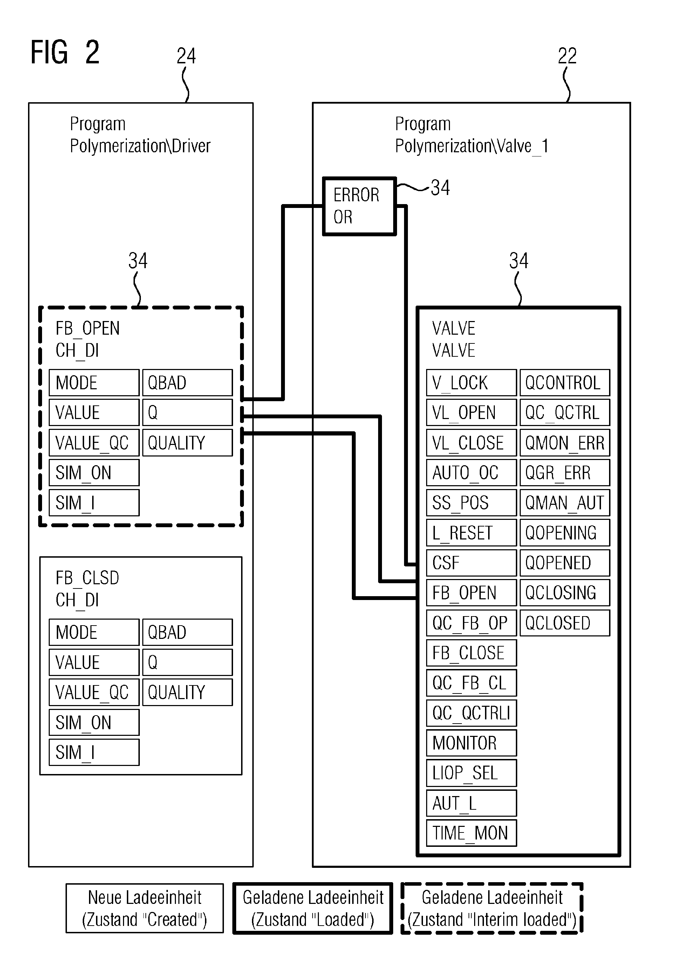

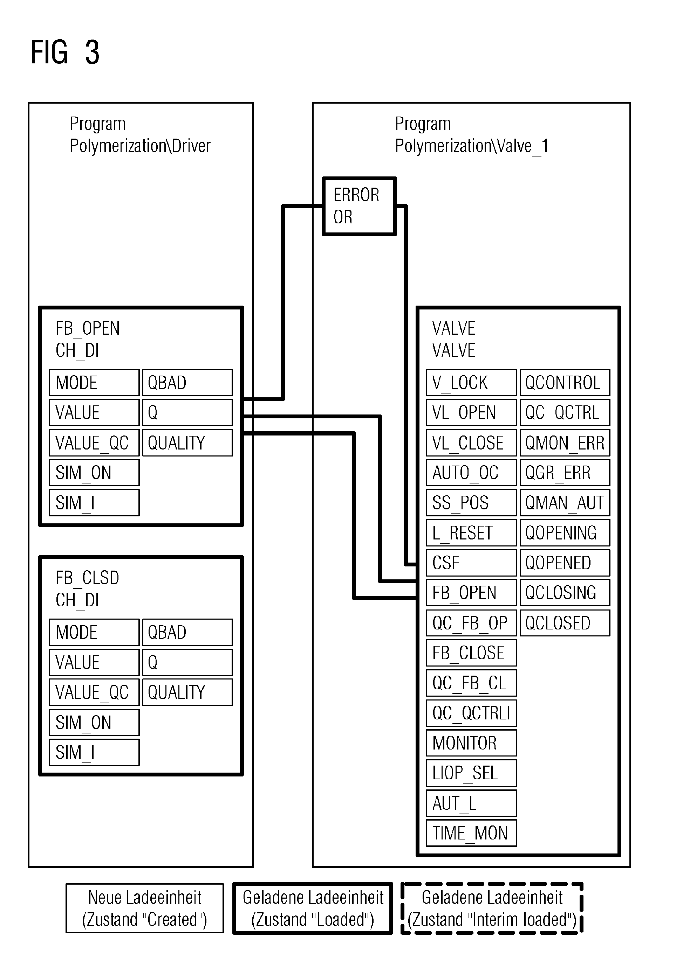

FIG 2 und FIG 3 zeigen dazu ein Beispiel anhand eines DCS-Systems (DCS = Distributed Control System), bei dem zur Programmierung der Automatisierungsprogramme 18 die Programmiersprache CFC einsetzt wird. Die CFC-Programme können kompiliert und einzeln auf das Automatisierungsgerät 10 geladen werden. Dazu wird die Ladekontrolle einem Ladezustandsautomaten übertragen. Der Ladezustandsautomat verwendet die bereits bisher benutzen Ladezustände sowie die gemäß dem hier vorgestellten Ansatz vorgesehenen zusätzlichen Übergangszustände zur Kennzeichnung einzelner Ladeeinheiten 34 (FIG 2).

FIG 2 zeigt ein vollständig geladenes Automatisierungsprogramm 18 (Ladeprogramm 22), das in der Darstellung den Titel "Programm Polymerization\Valve_1" aufweist. Erkennbar weist das Ladeprogramm 22 externe Beziehungen zu einem anderen Automatisierungsprogramm 18 (Nachbarprogramm 24) auf, das in der Darstellung mit dem Titel "Polymerization\Driver" bezeichnet ist. Diese externen Beziehungen verweisen auf eine Ladeeinheit 34 dieses Nachbarprogramms 24, die in der Darstellung mit dem Titel "FB_OPEN (CH DI)" bezeichnet ist. Diese Ladeeinheit 34 fungiert damit als externe Datenquelle für das Ladeprogramm 22. Die Ladeeinheit 34 aus dem Nachbarprogramm 24 ist ebenfalls geladen, allerdings nur zur Befriedigung der externen Datenzugriffe vom Ladeprogramm 22.

Die Ladeeinheit 34 des Nachbarprogramms 24 ist damit noch nicht Bestandteil der im Folgenden als Online-Programm bezeichneten Automatisierungslösung auf dem Automatisierungsgerät 10. Das Online-Programm oder die Automatisierungslösung umfassen ein oder mehrere Automatisierungsprogramme 18, wobei ein neu zum Automatisierungsgerät 10 übertragenes Ladeprogramm 22 nach vollständigem Abschluss des Transfers ein vom Online-Programm, also der jeweiligen Automatisierungslösung, umfasstes Automatisierungsprogramm 18 darstellt.

Die Ladeeinheit 34 des Nachbarprogramms 24 wird beim Laden das Ladeprogramms 22 aufgrund von dessen externen Beziehungen auf eben diese Ladeeinheit 34 neben dem Ladeprogramm 22 und dessen Ladeeinheiten 34 automatisch in den Speicher 14 des Automatisierungsgeräts 10 geladen. Zur Kennzeichnung der automatisch und zusätzlich zum Ladeprogramm 22 geladenen Ladeeinheit 34 wird ein Übergangszustand verwendet. Der Übergangszustand wird automatisch vom Ladezustandsautomat vergeben. Die einzelnen Zustände der Ladeeinheiten 34, wobei das Ladeprogramm 22 und das Nachbarprogramm 24 auch als Ladeeinheiten 34 aufgefasst werden, sind in FIG 2 und FIG 3 durch unterschiedliche Strichtypen gekennzeichnet. FIG 2 und FIG 3 umfassen dafür zur schnellen Übersicht jeweils im unteren Bereich eine Legende. Danach wird eine neue Ladeeinheit 34 mit einer durchgezogenen Linie als Außenumrandung dargestellt (Zustand: Created). Eine geladene Ladeeinheit 34 wird mit einer durchgezogenen und fetten Linie als Außenumrandung dargestellt (Zustand: Loaded). Diese beiden Zustände (Created, Loaded) sind Ladezustände, wie sie bisher beim Laden eines Ladeprogramms 22 auf ein Automatisierungsgerät 10 von dem dafür verwendeten Ladezustandsautomat benutzt werden. Eine zur Befriedigung externer Abhängigkeiten geladene Ladeeinheit 34 wird mit einer gestrichelten und fetten Linie als Außenumrandung dargestellt (Zustand: Interim Loaded). Dieser Zustand ist ein Beispiel für einen Übergangszustand, um den die bisherigen Ladezustände erweitert sind.

FIG 3 zeigt eine Situation auf Basis der Darstellung in FIG 2. Im Unterschied zu FIG 2 ist jetzt auch das Nachbarprogramm 24 ("Polymerization\Driver") geladen. Jetzt sind alle Ladezustände in einem Sollzustand ("Loaded").

Ein zentraler Aspekt des der hier beschriebenen Erfindung zugrunde liegenden Ansatzes besteht damit darin, für alle Ladeeinheiten 34 gemäß des Programmiermodells des jeweiligen Automatisierungsgeräts 10 - wie zum Beispiel Programm(baustein)e, Funktionsbausteine, Funktionen sowie Variablen mit statischem Gedächtnis (Instanzdatenbausteine) und globalen Variablen (globale Datenbausteine) - entweder einen bisher bereits gebräuchlichen Ladezustand oder zumindest einen zusätzlichen Übergangszustand zu verwalten. Statische Daten, also zum Beispiel Datenbausteine und Daten in Datenbausteinen, auf die vom Ladeprogramm 22 aus zugegriffen wird (externe Beziehung), können so gekennzeichnet in den Speicher 14 des Automatisierungsgeräts 10 geladen werden. Der Übergangszustand macht deutlich, dass die oder jede jeweilige Ladeeinheit 34 zum Zwecke der Befriedigung einer Abhängigkeit eines Ladeprogramms 22 von der Ladeeinheit 34 geladen wurde.

Für bereits in den Speicher 14 geladene Automatisierungsprogramme 18 wird des Weiteren ein Übergangszustand definiert, der das zwangsweise Laden nach dem Löschen einer externen Datenquelle signalisiert. Auf diese Art und Weise wird die Basis für ein kontrolliertes Laden von einzelnen Automatisierungsprogrammen mit Datenzugriffen auf externe Daten gelegt.

Das Löschen einer bereits geladenen Ladeeinheit 34 ist dann nicht rückwirkungsfrei, wenn sie von ebenfalls bereits geladenen Automatisierungsprogrammen 18 referenziert wird. Aus diesem Grunde muss die zu löschende Ladeeinheit 34 alle Automatisierungsprogramme 18 bzw. zu den Automatisierungsprogrammen 18 gehörenden Ladeeinheiten 34, die diese zu löschende Ladeeinheit 34 referenzieren, derart verwalten, dass sie zum Zeitpunkt des tatsächlichen Löschens der Ladeeinheit 34 auf dem Automatisierungsgerät 10 zwangsweise mitgeladen werden können.

Zu diesem Zwecke werden die geladenen Ladeeinheiten 34, die die zu löschende Ladeeinheit 34 referenzieren, in einen speziellen Übergangszustand 38 (Zustand: External Referenced Object Deleted) überführt und bevorzugt datenbanktechnisch mit einer Beziehung zur zu löschenden Ladeeinheit 34 verwaltet.

Wenn nun die zu löschende Ladeeinheit 34 - typischerweise eingeleitet durch eine entsprechende Anwenderaktion - tatsächlich auf dem Automatisierungsgerät 10 implizit oder explizit gelöscht werden soll, können mit Hilfe der verwalteten Beziehungen, nämlich der insbesondere datenbankmäßig verwalteten Beziehungen, und der speziellen Übergangszustände 38 (Zustand: External Referenced Object Deleted) diejenigen Ladeeinheiten 34 ermittelt werden, die vor dem logischen Löschen der Ladeeinheit 34 diese referenziert haben, um sie vor dem Löschvorgang der Ladeeinheit 34 zwangsweise nun ohne ihre Referenzen auf die zu löschende Ladeeinheit 34 auf dem Automatisierungsgerät 10 zu überladen.

Ein Ladezustandsautomat unterscheidet typischerweise folgende Ladezustände für Ladeeinheiten 34 wie Programm(baustein)e, Funktionsbausteine, Funktionen, Instanzdatenbausteine und globale Datenbausteine, etc.:
Not Present (Urzustand)
   Eine zu löschende Ladeeinheit 34 wird im Rahmen eines Ladevorgangs in diesen Zustand überführt. Die Ladeeinheit 34 ist damit nicht mehr existent. Aus diesem Urzustand heraus wird auch eine neue Ladeeinheit 34 kreiert.
Created
   Dieser Zustand zeigt an, dass die Ladeeinheit 34 neu ist und noch geladen werden muss, also noch nicht zum Online-Programm im Speicher 14 des Automatisierungsgeräts 10 gehört.
Loaded
   Dieser Zustand zeigt an, dass die Ladeeinheit 34 bereits geladen wurde und damit zum Online-Programm auf dem Automatisierungsgerät 10 gehört.
Changed
   Dieser Zustand zeigt an, dass die Ladeeinheit 34 bereits geladen wurde und damit zum Online-Programm gehört, aber zwischenzeitlich geändert wurde.
Deleted
   Dieser Zustand zeigt an, dass die Ladeeinheit 34 bereits einmal geladen wurde und damit zum Online-Programm gehört. Allerdings wurde diese Ladeeinheit 34 inzwischen gelöscht. Die Ladeeinheit ist zwar noch im Speicher 14 des Automatisierungsgeräts 10 existent, ist aber durch die Auszeichnung mit diesem Zustand als auf dem Automatisierungsgerät 10 zu löschen gekennzeichnet.
   Ein Übergang von einem ersten Zustand in einen zweiten Zustand (Zustandsübergang) kann typischerweise durch folgende Ereignisse herbeigeführt werden:
Creating
   Dieses Ereignis legt eine neue Ladeeinheit 34 an. Die Ladeeinheit 34 gehört danach aber noch nicht zum Online-Programm im Speicher 14 des Automatisierungsgeräts 10.
Loading
   Dieses Ereignis lädt eine Ladeeinheit 34 im Rahmen eines Ladevorgangs in den Speicher 14 des Automatisierungsgeräts 10. Als Besonderheit werden auch als logisch gelöscht gekennzeichnete Ladeeinheiten 34 mit dem Zustand Deleted im Rahmen dieses Ereignisses tatsächlich im Speicher 14 des Automatisierungsgeräts 10 gelöscht.
Changing
   Dieses Ereignis kennzeichnet eine bereits in den Speicher 14 geladene Ladeeinheit 34 als von einer Änderung betroffen.
Deleting
   Dieses Ereignis kennzeichnet eine Ladeeinheit 34 als logisch gelöscht. Als logisch gelöscht gekennzeichnete Ladeeinheiten 34 werden später tatsächlich im Rahmen des Ereignisses "Loading" gelöscht, zum Beispiel indem der bisher belegte Speicherplatz im Speicher 14 freigegeben oder durch eine neue Ladeeinheit 34 überschrieben wird.
   Ereignisse werden typischerweise durch Anwenderaktionen im Engineeringsystem ausgelöst. Das Einfügen eines Objekts in einem Editor führt zu einem Ereignis Creating, das gemäß dem Zustandsautomaten auf die dem Objekt zugeordneten Ladeeinheiten 34 angewendet wird. Sollen die mit Hilfe des Engineeringsystems verwalteten Objekte - wie z.B. Messstellen, etc. - auf das Automatisierungsgerät 10 transferiert werden, wird das Ereignis Loading ausgelöst. Im Kontext des Ereignisses Loading werden die zugeordneten Ladeeinheiten 34 im Speicher 14 des Automatisierungsgeräts 10 angelegt und andere Ladeeinheiten 34 in Abhängigkeit ihres Zustands 36 aus dem Speicher 14 des Automatisierungsgeräts 10 gelöscht.

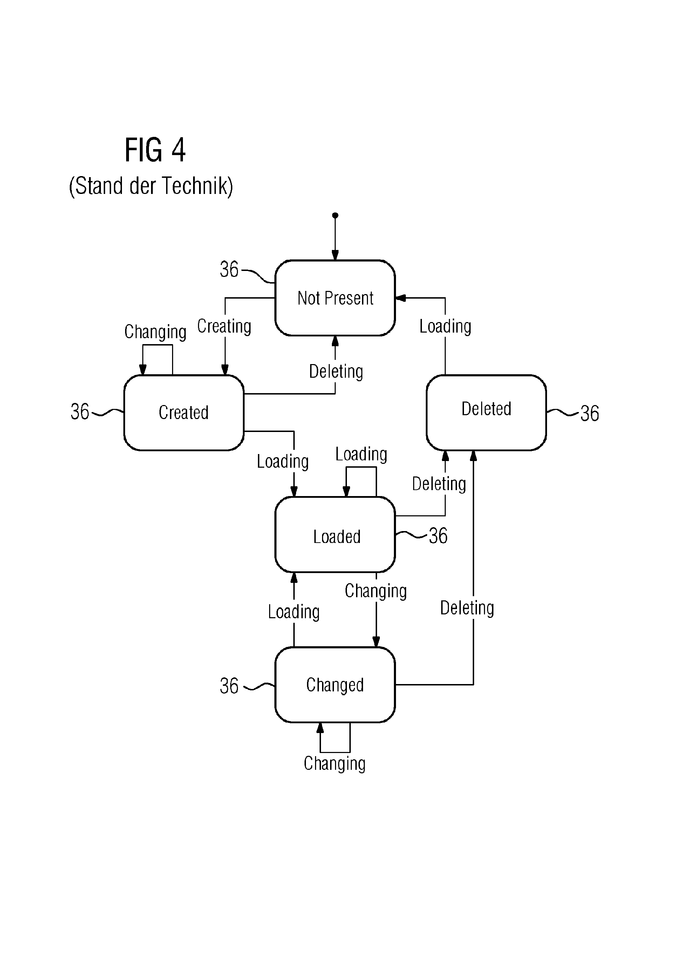

Das Diagramm in FIG 4 zeigt den Zustandsautomaten für eine Ladeeinheit 34 mit den Ladezuständen und Zustandsübergängen in Abhängigkeit von den Ereignissen.

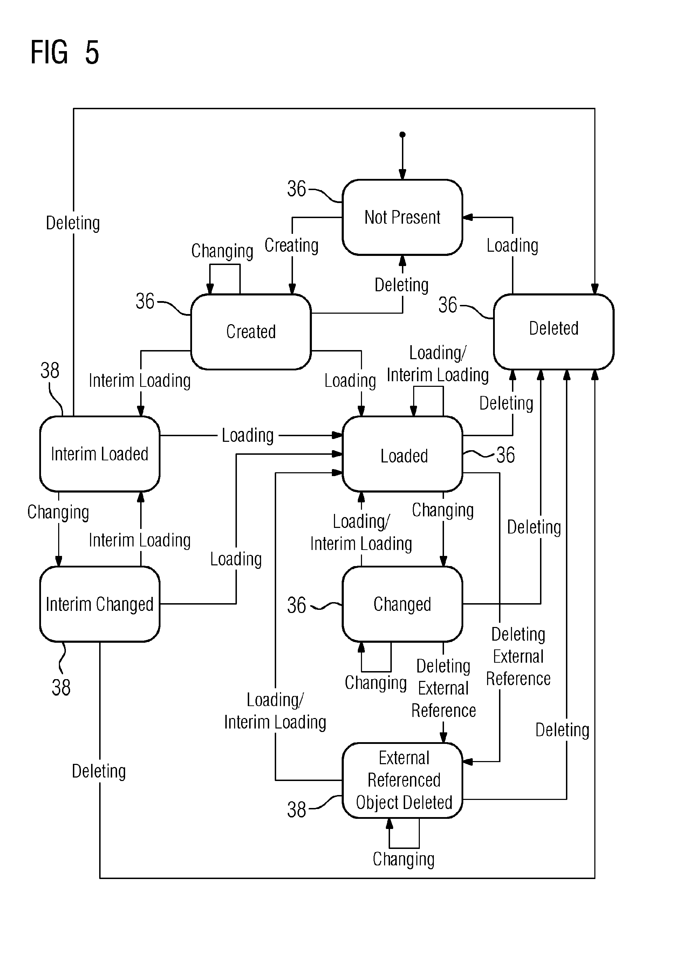

Gemäß dem hier vorgeschlagenen Ansatz werden zusätzlich zu den oben beschriebenen und in FIG 4 graphisch dargestellten Ladezuständen 36 und zwischen zwei Ladezuständen 36 definierten Zustandsübergängen die nachstehenden und in FIG 5 dargestellten Übergangszustände 38 eingeführt. Diese Übergangszustände 38 stellen zusätzliche Ladezustände dar. Die Bezeichnung als Übergangszustand 38 resultiert daraus, dass sie nach der Inbetriebsetzung der jeweiligen Automatisierungslösung im Produktivbetrieb der Anlage nicht mehr vorkommen sollten. Die Übergangszustände 38 bedingen eine entsprechende Erweiterung des Zustandsautomaten.

Bei den zusätzlichen Ladezuständen handelt es sich zumindest um die folgenden Übergangszustände 38:
Interim Loaded
   Dieser Übergangszustand 38 zeigt an, dass die Ladeeinheit 34 bereits in den Speicher 14 des jeweiligen Automatisierungsgeräts 10 geladen wurde und damit zum Online-Programm gehört, aber nur zum Zwecke der Befriedigung eines externen Datenzugriffs auf eben diese Ladeeinheit 34.
Interim Changed
   Dieser Übergangszustand 38 zeigt an, dass die Ladeeinheit 34 bereits in den Speicher 14 geladen wurde und damit zum Online-Programm gehört, aber nur zum Zwecke der Befriedigung eines externen Datenzugriffs auf diese Ladeeinheit 34 und dass diese Ladeeinheit 34 zwischenzeitlich geändert wurde.
External Referenced Object Deleted
   Dieser Übergangszustand 38 zeigt an, dass die Ladeeinheit 34 bereits in den Speicher 14 geladen wurde und damit zum Online-Programm gehört, aber ein extern referenziertes Objekt, also eine von dieser Ladeeinheit 34 referenzierte andere Ladeeinheit 34, logisch gelöscht wurde. Diese Ladeeinheit 34 wird spätestens im Zuge des Ladevorgangs "Loading" der anderen Ladeeinheit 34 mit dem Zustand "Deleted" auch automatisch und zwangsweise nachgeladen.

In einer Variante des hier beschriebenen Verfahrens kann der Übergangszustand 38 mit der Bezeichnung "External Referenced Object Deleted" auch entfallen. Dann ist vorgesehen, dass für eine Ladeeinheit 34 externe Referenzen auf diese Ladeeinheit 34 gezählt werden und dieser Zähler bei jedem Wegfall einer externen Referenz auf diese Ladeeinheit 34 dekrementiert wird. Auf diese Art und Weise kann gesteuert und kontrolliert werden, dass eine Ladeeinheit 34 erst dann in den Zustand "Deleted" überführt wird, wenn es keine Referenzen mehr auf die betreffende Ladeeinheit 34 gibt.

Die folgenden Ereignisse werden eingeführt, um einen Zustandsübergang in einen der oben definierten Übergangszustände 38 zu erreichen:
Interim Loading
   Dieses Ereignis lädt eine extern referenzierte Ladeeinheit 34 im Rahmen des Ladevorgangs eines Ladeprogramms 22. Die extern referenzierte Ladeeinheit 34 gehört danach zum Online-Programm im Speicher 14 des Automatisierungsgeräts 10.
Deleting External Reference
   Dieses Ereignis erzwingt ein Nachladen der Ladeinheit 34 im Rahmen des nächsten Ladevorgangs einer extern referenzierten Ladeeinheit 34, weil eine extern referenzierte Ladeeinheit 34 gelöscht - genauer als gelöscht markiert - wurde, allerdings nur dann, wenn die Ladeeinheit 34 selbst bereits geladen wurde.

FIG 5 zeigt den vollständigen Graph des Zustandsautomaten für eine Ladeeinheit 34 gemäß dem hier vorgeschlagenen Verfahren mit den neu eingeführten (Übergangs-)Ladezuständen und Zustandsübergängen in Abhängigkeit von den Ereignissen. Bemerkung: Bei allen Ereignissen, die an einem Ladezustand 36 oder Übergangszustand 38 nicht dargestellt sind, bleiben die Ladezustände 36 unverändert oder das Ereignis wird als unzulässig erklärt.

Wenn ein Ladeprogramm 22 (FIG 1, FIG 2) einzeln in den Speicher 14 des Automatisierungsgeräts 10 geladen werden soll, werden zunächst alle direkt zugeordneten Ladeeinheiten 34 (wie Instanzdatenbausteine, etc.) und wegen eventueller externer Abhängigkeiten alle indirekt beteiligten Ladeeinheiten 34 ermittelt. Alle Ladeeinheiten 34 werden in Abhängigkeit von ihren Ladezuständen 36 auf das Automatisierungsgerät 10 geladen. Für die direkt zugeordneten Ladeeinheiten 34 wird mit Hilfe des Ereignisses "Loading" ein Zustandsübergang gemäß dem Zustandsautomaten (FIG 4 oder FIG 5) durchgeführt. Bei den indirekt beteiligten Ladeeinheiten 34, also bei Ladeeinheiten 34, die sich aufgrund externer Beziehungen, nämlich insbesondere Referenzierungen externer Ladeeinheiten 34, ergeben, führt das neue Ereignis "Interim Loading" zu einem entsprechenden Zustandsübergang gemäß des Zustandsautomaten (FIG 5: ausgehend vom Ladezustand 36 "Created" zum neu eingeführten Übergangszustand 38 "Interim Loaded").

Wenn ein zweites Ladeprogramm 22 einzeln geladen werden soll, wird dies auf die gleiche Art und Weise geladen wie das erste Ladeprogramm 22 (vgl. FIG 2, FIG 3 und die dort darstellten Automatisierungsprogramme 18). Zu bemerken ist hier allerdings, dass Ladeeinheiten 34, die vom ersten Ladeprogramm 22 extern referenziert werden, sich im Übergangs zustand 38 "Interim Loaded" befinden. Diese extern referenzierten Ladeeinheiten 34 werden mit dem Ereignis "Loading" vom Übergangszustand 38 "Interim Loaded" in den Ladezustand 36 "Loaded" überführt. Auf diese Art und Weise erlangen alle Ladeeinheiten 34 nach und nach den hier als Zielzustand aufzufassenden Ladezustand 36 "Loaded", der nach einer Inbetriebsetzung den Sollzustand für jede Ladeeinheit 34 darstellt.

Wird eine extern referenzierte Ladeeinheit 34 selbst oder zusammen mit einem ganzen Automatisierungsprogramm 18 gelöscht, führt dies auch zum Löschen aller Beziehungen (zum Beispiel der Datenverschaltungen). Die oder jede extern referenzierte Ladeeinheit 34 wird in den Ladezustand 36 "Deleted" überführt. In diesem Fall werden alle Ladeeinheiten 34, die vorher eine externe Abhängigkeit zu dieser gelöschten Ladeeinheit 34 hatten und selbst in den Speicher 14 geladen sind, mit Hilfe des Ereignisses "Deleting External Reference" in den Übergangszustand "External Referenced Object Deleted" überführt. Auf diese Art und Weise wird gewährleistet, dass bei einem nächsten Ladevorgang diejenigen Ladeeinheiten 34 ermittelt werden können, die zwangsweise geladen werden müssen, weil zumindest eine der vorher extern referenzierten Ladeeinheiten 34 im Zuge des nächsten Ladevorgangs im Speicher 14 des Automatisierungsgeräts 10 gelöscht wird.

Wie oben beschrieben kann das Verfahren in einer Variante auch den Zustandswechsel der extern referenzierten Ladeeinheit 34 in den Ladezustand "Deleted" solange aufschieben, bis es keine externen Referenzen in auf dem Automatisierungsgerät 10 geladenen Ladeeinheiten 34 mehr gibt. Bei dieser Verfahrensvariante kann der Übergangszustand 38 "External Referenced Object Deleted" entfallen. In diesem Fall würde das Löschen der Ladeeinheit 34 bei noch vorhandenen externen Referenzen dazu führen, dass diese Ladeeinheit 34 solange noch im Ladezustand "Interim Loaded" oder in einem der Zustände "Interim Changed", "Loaded", "Changed", etc. verbleibt.

Dieses Verfahren lässt sich gemäß dem definierten Ladezustandsautomaten auch mit anderen Ladevorgängen kombinieren, zum Beispiel mit einem Gesamtladen (alle Automatisierungsprogramme 18) oder einem Differenzladen (alle noch nicht geladenen oder geänderten Automatisierungsprogramme 18). In diesen genannten Fällen müssen die betroffenen Automatisierungsprogramme 18 ermittelt und Programm für Programm wie hier beschrieben geladen werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben wird zuvorderst ein Verfahren zum Laden von einzelnen Automatisierungsprogrammen 18 mit externen Beziehungen in ein Automatisierungsgerät 10, wobei ein zu ladendes Automatisierungsprogramm 18 ein oder mehrere Ladeeinheiten 34 umfasst oder benutzt, wobei für alle Ladeeinheiten 34 ein Ladezustand 36 verwaltet wird, wobei sich das Verfahren dadurch auszeichnet, dass die möglichen Ladezustände 36 um Übergangszustände 38 erweitert sind, wobei die Übergangszustände 38 automatisch erzeugt werden, wenn beim Laden eines Automatisierungsprogramms 18 mit externen Beziehungen neben dem Automatisierungsprogramm 18 und dessen Ladeeinheiten 34 automatisch und aufgrund der externen Beziehungen zumindest eine weitere Ladeeinheit 34 geladen wird. Darüber hinaus wird auch ein Graph für einen Zustandsautomaten angegeben, welcher die Übergangszustände 38 und Übergänge zwischen Ladezuständen 36 und Übergangszuständen 38 definiert, der bei der Implementation des Verfahrens zugrunde gelegt werden kann.

## Patentansprüche

1. Verfahren zum Laden von einzelnen Automatisierungsprogrammen (18) mit externen Beziehungen in ein Automatisierungsgerät (10),
wobei ein zu ladendes Automatisierungsprogramm (18) ein oder mehrere Ladeeinheiten (34) umfasst oder benutzt,
wobei für alle Ladeeinheiten (34) ein Ladezustand (36) verwaltet wird,
**dadurch gekennzeichnet, dass**
die möglichen Ladezustände (36) um Übergangszustände (38) erweitert sind,
wobei die Übergangszustände (38) automatisch erzeugt werden, wenn beim Laden eines Automatisierungsprogramms (18) mit externen Beziehungen neben dem Automatisierungsprogramm (18) und dessen Ladeeinheiten (34) automatisch und aufgrund der externen Beziehungen zumindest eine weitere Ladeeinheit (34) geladen wird.

2. Verfahren nach Anspruch 1, wobei ein erster Übergangszustand (38) eine Ladeeinheit (34) als zum Zwecke der Befriedigung eines externen Datenzugriffs auf eben diese Ladeeinheit (34) geladen kennzeichnet.

3. Verfahren nach Anspruch 1 oder 2, wobei ein zweiter Übergangszustand (38) eine Ladeeinheit (34) als zum Zwecke der Befriedigung eines externen Datenzugriffs auf eben diese Ladeeinheit (34) geladen und zwischenzeitlich geändert kennzeichnet.

4. Verfahren nach Anspruch 1, 2 oder 3, wobei ein dritter Übergangszustand (38) eine Ladeeinheit (34) als geladen kennzeichnet, wobei eine von der geladenen Ladeeinheit (34) referenzierte Ladeeinheit (34) gelöscht wurde.

5. Verfahren nach Anspruch 1, 2 oder 3, wobei externe Referenzen auf eine logisch zu löschende Ladeeinheit (34) gezählt werden, wobei ein Zähler bei Wegfall einer externen Referenz dekrementiert wird und wobei die Ladeeinheit (34) mit dem Ladezustand (36) "gelöscht" gekennzeichnet wird, wenn der Zählerstand anzeigt, dass keine externen Referenzen auf die Ladeeinheit (36) mehr existieren.

6. Computerprogramm mit Programmcodemitteln, um alle Schritte von jedem beliebigen der Ansprüche 1 bis 4 durchzuführen, wenn das Computerprogramm auf einem Programmiergerät (28) oder einem Automatisierungsgerät (10) ausgeführt wird.

7. Computerprogramm nach Anspruch 6 mit einer Implementation eines Zustandsautomaten, der für alle Ladeeinheiten (34) einen Ladezustand (36) verwaltet, wobei die möglichen Ladezustände (36) um Übergangszustände (38) erweitert sind, wobei die Übergangszustände (38) automatisch erzeugt werden, wenn beim Laden eines Automatisierungsprogramms (18) mit externen Beziehungen neben dem Automatisierungsprogramm (18) und dessen Ladeeinheiten (34) automatisch und aufgrund der externen Beziehungen zumindest eine weitere Ladeeinheit (34) geladen wird.

8. Computerprogramm nach Anspruch 6 oder 7, mit Programmcodemitteln zum Erkennen von externen Beziehungen eines Automatisierungsprogramms (18).

9. Digitales Speichermedium mit elektronisch auslesbaren Steuersignalen, die so mit einer Verarbeitungseinheit (12, 32) nach Art eines Mikroprozessors zusammenwirken können, dass ein Verfahren nach einem der Ansprüche 1 bis 5 ausgeführt wird.

10. Verwendung eines Zustandsautomaten zum Laden von einzelnen Automatisierungsprogrammen (18) mit externen Beziehungen in ein Automatisierungsgerät (10),
wobei ein zu ladendes Automatisierungsprogramm (18) ein oder mehrere Ladeeinheiten (34) umfasst oder benutzt,
wobei der Zustandsautomat für alle Ladeeinheiten (34) einen Ladezustand (36) verwaltet,
**dadurch gekennzeichnet, dass**
die möglichen Ladezustände (36) um Übergangszustände (38) erweitert sind,
wobei der Zustandsautomat die Übergangszustände (38) automatisch erzeugt,
wenn beim Laden eines Automatisierungsprogramms (18) mit externen Beziehungen neben dem Automatisierungsprogramm (18) und dessen Ladeeinheiten (34) automatisch und aufgrund der externen Beziehungen zumindest eine weitere Ladeeinheit (34) geladen wird.

11. Automatisierungs- oder Programmiergerät (10, 28) mit einer Verarbeitungseinheit (12, 32) und einem Speicher (14, 30), in den ein Computerprogramm nach einem der Ansprüche 6, 7 oder 8 geladen ist, das im Betrieb des Gerätes (10, 28) durch dessen Verarbeitungseinheit (12, 32) ausgeführt wird.
